(19) Europäisches Patentamt / European Patent Office / Office européen des brevets

(11) **EP 2 779 360 A2**

(12) **EUROPEAN PATENT APPLICATION**

(43) Date of publication:
**17.09.2014 Bulletin 2014/38**

(51) Int Cl.:
***H02J 7/34*** (2006.01)

(21) Application number: **14159666.8**

(22) Date of filing: **13.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2013 US 201313844268**

(71) Applicant: **Echelon Corporation
San Jose, CA 95126 (US)**

(72) Inventors:
• **van Ruymbeke, Gilles
Menlo Park, CA California 94025 (US)**
• **Keller, Richard
Palo Alto, CA California 94306 (US)**
• **Dibble, Michael
Campbell, CA California 95008 (US)**

(74) Representative: **Giles, Ashley Simon
Haseltine Lake LLP
Lincoln House, 5th Floor
300 High Holborn
London WC1V 7JH (GB)**

(54) **Mother/Daughterboard Power Supply**

(57) Circuits are described that permit the efficient supply of power from a backplane such as that contained in a motherboard. In one embodiment, the power supply stores charge at a relatively high potential to permit a last transmission from a daughterboard when power is interrupted to the motherboard.

FIG. 3A

EP 2 779 360 A2

**Description**

**FIELD OF THE INVENTION**

The invention relates to power supplies and more particularly the supplying of power from one printed circuit board (or backplane) to another printed circuit board, such as from a motherboard (MB) to a daughterboard (DB).

**BACKGROUND**

Often a circuit board receives power from a backplane or another circuit board. Common among these arrangements is the mounting of a daughterboard (DB) to a motherboard (MB) where power from the DB is supplied from the MB.

Operating a power supply at its maximum efficiency has become more important in recent years to conserve battery power, among other reasons. Generally a DC power supply has a maximum efficiency, inherent in its design, at a predetermined percentage of its maximum power output. For instance, a switched DC power supply may have a maximum efficiency at 70% when operating at 80% of its maximum output. When operating at other than 80% of its maximum power output the supply's efficiency may be less than 70%.

Several techniques are known to keep a power supply at its maximum efficiency even under changing operating conditions (e.g. where a computer goes from active to standby state). Clock frequencies, fan speeds, processor core shedding or the adding of cores, may occur to maintain maximum efficiency. See, U.S. Patent 7,904,740 and U.S. Patent 8,041,963.

**BRIEF DESCRIPTION OF THE DRAWINGS**

Figure 1 is a perspective view of a motherboard (MB) and a single daughterboard (DB) engaging the MB.
Figure 2 is a close-up view of a connector for providing electrical connections between the MB and DB of Figure 1.
Figure 3A is an electrical schematic of a power supply circuit which provides a "last gasp" of energy if the AC power is lost, for instance to allow for the transmission of an alert signal according to one embodiment.
Figure 3B is an alternative electrical schematic of a power supply circuit that provides a "last gasp" of energy if the AC power is lost, for instance to allow for the transmission of an alert signal according to one embodiment.
Figure 4A is a graph illustrating the on/off cycling of a power supply operating between Vmax and Vmin.
Figure 4B is a graph illustrating power supply efficiency vs. power supply output.

Figure 5 is an electrical schematic of a circuit for switching a power supply, on and off, between Vmax and Vmin.
Figure 6 is an electrical schematic of a circuit with feedback from a DB to an MB used to provide a predetermined power supply potential from the MB to the DB.

**SUMMARY OF THE INVENTION**

In one embodiment, a switched mode power supply having a primary side circuit and a secondary side circuit interconnected by a transformer is disclosed. A capacitor is used to store power and at least one diode couples a primary winding of the transformer to the capacitor such that when a first switch of the switched power supply opens, the capacitor receives the back emf from the primary winding. A second switch turns on and off the pumping of the capacitor with the back emf. A third switch connects the capacitor to the primary side circuit when a detector detects the loss of AC power.

**DETAILED DESCRIPTION**

Several circuits are disclosed that provide improved DC power from a backplane as on a motherboard (MB) to a circuit board engaging the backplane such as a daughterboard (DB). In the following description, numerous specific details are set forth such as specific circuit components and associated potentials, in order to provide a thorough understanding of the present invention. It will be apparent to one skilled in the art, that the present invention may be practiced without these specific details. In other instances, well-known electrical circuit designs and implementations are not described in detail to avoid unnecessarily obscuring the disclosed matter.

The improvements described below are used on a MB with its compatible DBs where the MB collects or concentrates data relating to power, such as meter readings, and provides other control, for example for street lighting. The DBs provide communication links such as RF links, power line communication links, links to other networks, etc. This particular application is not critical to the present invention.

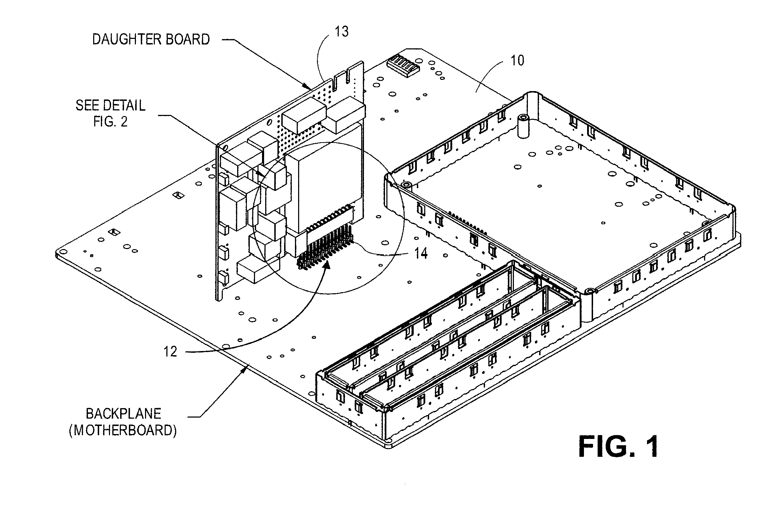

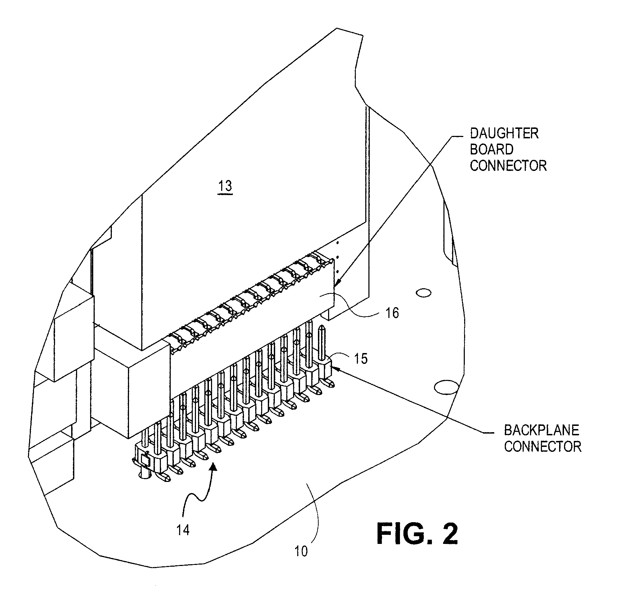

A MB 10 which includes a backplane 14 is illustrated in Figure 1, including a male connector 14 and the female DB connector 13. In a typical application there are several male connectors 14 each for receiving DBs. The detailed view of the connector 14 reveals that it includes a plurality of pins 15, as shown in Figure 2.

In the prior art, the female connector 16 on the DB includes spring contacts, one for receiving each of the male prongs on the DB connector. In this way objects touching or dropped onto the MB will not short pins of a male connector. The problem with this arrangement, however, is that if one of the springs in one of the female connectors fails, it is a much larger job to change the connector on the MB or backplane as opposed to reworking a single DB because the spring is more likely to break or is more fragile than the connector pin.

The prior art arrangement is reversed in Figure 2; the male connector is in the backplane of the MB and the female connector is on the DB. The advantage to this is that if a spring of a female connector fails, only a single DB needs to be reworked, a fair less onerous task than reworking the MB.

In the embodiment described below, some of the DBs require different voltages for operation than others. The male and female connector used on MB/DB requiring different voltages is the same thus there must be some mechanism to alert the MB as to what voltage is required by the DB. As will be seen, as a DB is inserted into the MB, a signal representing the voltage required by that particular DB is sensed in a feedback path by the MB so that the proper potential is applied for operation of the DB. Additionally, since all the power for the DBs originates at the MB, a power failure at the MB may in some circumstances cause problems with the equipment or signal gathering facilities associated with DBs. As will be seen, if power fails on the MB the MB has sufficient power storage to allow the DB to send a message indicating that power has been lost. This "last gasp" of power is stored on the MB in a more efficient manner when compared to prior art arrangements, which provide for last gasp power.

## LAST GASP POWER CIRCUIT

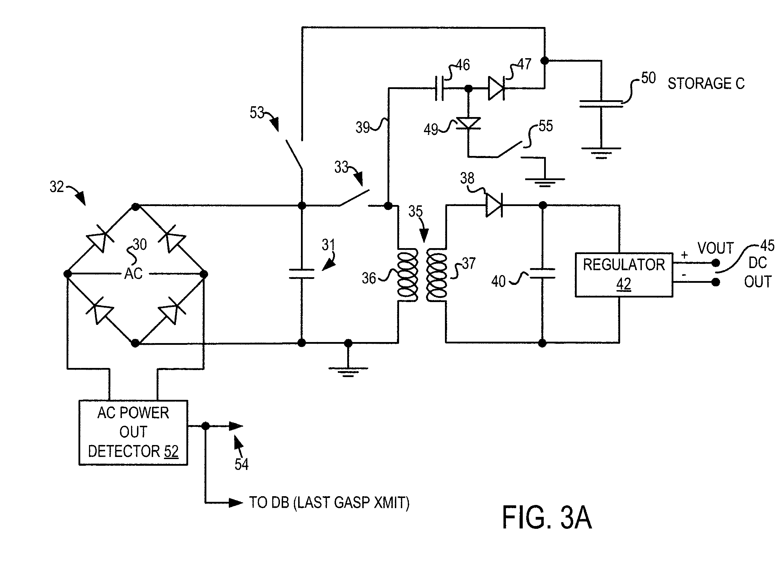

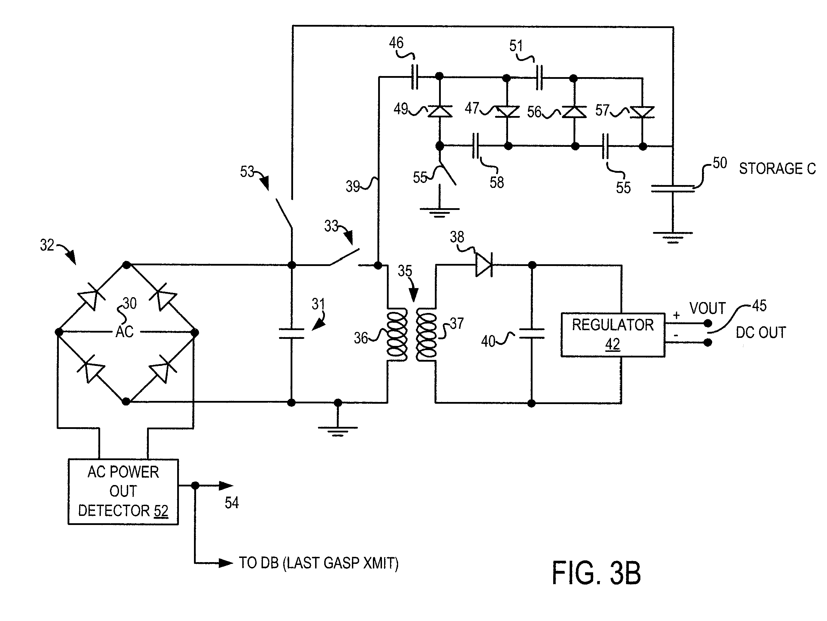

Figure 3A illustrates an electrical schematic of a power supply circuit which provides a "last gasp" of energy if the AC power is lost, for instance to allow for the transmission of an alert signal according to one embodiment. Figure 3B illustrates an alternative electrical schematic of the power supply circuit of Figure 3A according to one embodiment.

Figures 3A and 3B illustrate a switched power supply which receives AC power 30 coupled to a full wave rectifying diodes 32. The output of the diodes provide power to the primary winding 36 of the transformer 35. In this switched power arrangement, a switch 33 opens and closes to chop the DC power from the rectifier in order that power may be passed through the transformer to the secondary winding 37. A capacitor 31 is used in association with the switch 33 to smooth the operation on the primary side of the power supply. Switched power supplies are very well-known and commonly used in a host of electronic circuits.

On the secondary side of the power supply circuit of Figure 3, the AC signal from winding 37 is rectified through the diode 38, filtered by the capacitor 40, and then applied to a regulator 42 to provide a DC output 45. The regulator 42 may be an ordinary buck regulator commonly used in conjunction with switched power supplies.

The circuits of Figure 3A-B include a detector 52 to detect when AC power is lost. The detector 52, upon detecting the loss of the AC power, provides a signal causing a last gasp transmission to be sent and also, as shown by line 54, closes a switch 53.

Ordinarily, energy is stored on the capacitor 40 and it will supply sufficient power for a last gasp transmission. However, often the capacitance required of the capacitor 40 is relatively high since the secondary side of the power supply operates at a low voltage. It is well known that the energy stored on a capacitor is equal to:

$$e = \frac{cv^2}{2}$$ where "c" is the capacitance and "v" is the voltage on the capacitor. It is apparent from this equation that increasing the voltage at which the energy is stored is a more effective way of providing additional energy as opposed to increasing the capacitance of the capacitor.

The circuits of Figures 3A-B store the last gasp energy primarily on a capacitor 50. In Figure 3A, the capacitor 50 is connected to the primary winding 36 through a diode 47 and accompanying capacitor 46. In Figure 3B, the capacitor 50 is part of a voltage multiplier circuit that can be used to improve the system's dynamic range and also includes the capacitors 51, 55, 58, and diodes 56 and 57 when compared to Figure 3A.

During normal operation the switch 53 is open, the switch 55 is closed, and the switch 33 continually opens and closes. When the switch 33 opens a back electromotive force (emf) (sometimes also referred to a counter emf) occurs on line 39 which is coupled to the capacitor 50. The potential on line 39 is equal to the inductance associated with the winding 36, times the rate of decay of the current, once switch 33 opens. In a typical application where the AC potential 30 is for instance 220 volts (rms), the potential on line 39 can exceed

$$220 \text{ volts} \times \sqrt{2}.$$ The capacitor 46 and diode 47 act as a charge pumping circuit (in Figure 3B, the capacitors 51, 55, and 58, and the diodes 56 and 57 are also part of the charge pumping circuit), allowing the back emf to pump up the capacitor 50. In a typical circuit, capacitor 50 may be a standard 440 volt capacitor. The switch 55 may be used to stop the pump charging effect and over time regulate the voltage of the storage capacitor 50.

When the AC power fails and switch 53 closes, the potential from the capacitor 50 is fed into the primary side of the switched power supply. The energy from the capacitor 50 provides the last gasp power, permitting a transmission or other activity such as non-volatile storage or the shutting down of a critical function. While there is a penalty associated with increasing the voltage of a capacitor, it typically is less onerous than increasing the capacitance of the capacitor.

## OPERATION OF POWER SUPPLY AT ITS MAXIMUM EFFICIENCY

As discussed above, ideally a power supply such as the power supply of Figure 3 operates at its maximum efficiency. This efficiency can be fixed as a percent of the power supply's maximum output by design. In some cases once a power supply reaches its maximum efficiency it remains at that efficiency to its maximum output. Numerous techniques are known in the design of power supplies, such as buck power supplies, for fixing the maximum efficiency based on a percentage of a power supply's output. As described above, numerous techniques are also known for maintaining the proper load at the output of the power supply so that it operates at its maximum efficiency.

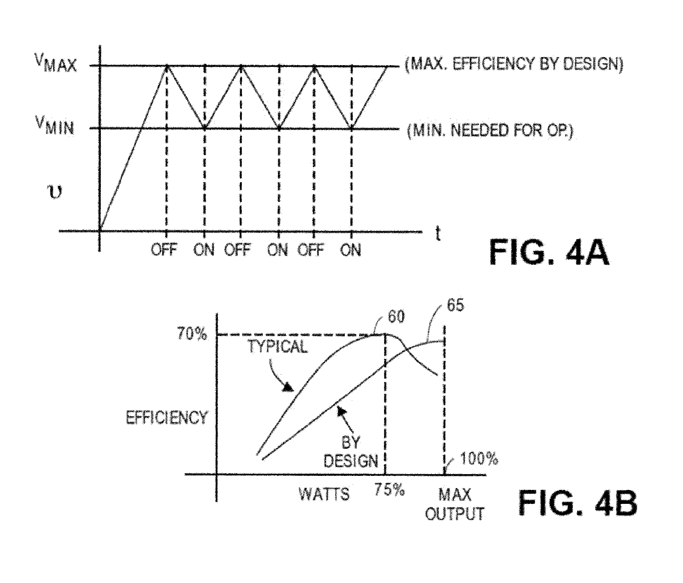

Referring to Figure 4B, a typical power output vs. efficiency curve 60 for a power supply is shown. The supply's maximum efficiency of 70% is reached at about 75% of its maximum output. Beyond 75% of the maximum output the efficiency of the power supply declines. For power supply operation as described in this application, ideally the power supply should have its maximum efficiency at its maximum output. This is shown by curve 65 of Figure 4B. The power supply provides a maximum efficiency of 70% at its maximum output of 100%. As mentioned above, this is done using known circuit design techniques.

For operating a power supply at its maximum efficiency at all times no matter what the load as taught by the present application, the minimum voltage needed for operating the circuit is determined. This is shown in Figure 4A as Vmin. Also, a maximum voltage is selected, for instance one that will not damage the circuit. This is shown as Vmax of Figure 4A. To operate a power supply as described in this application, the supply is turned on and off so as to maintain its output between Vmax and Vmin. Thus the power supply is either fully on or fully off, and if its design meets the criteria of curve 65 of Figure 4B, the power supply will always operate at its maximum efficiency no matter what the load.

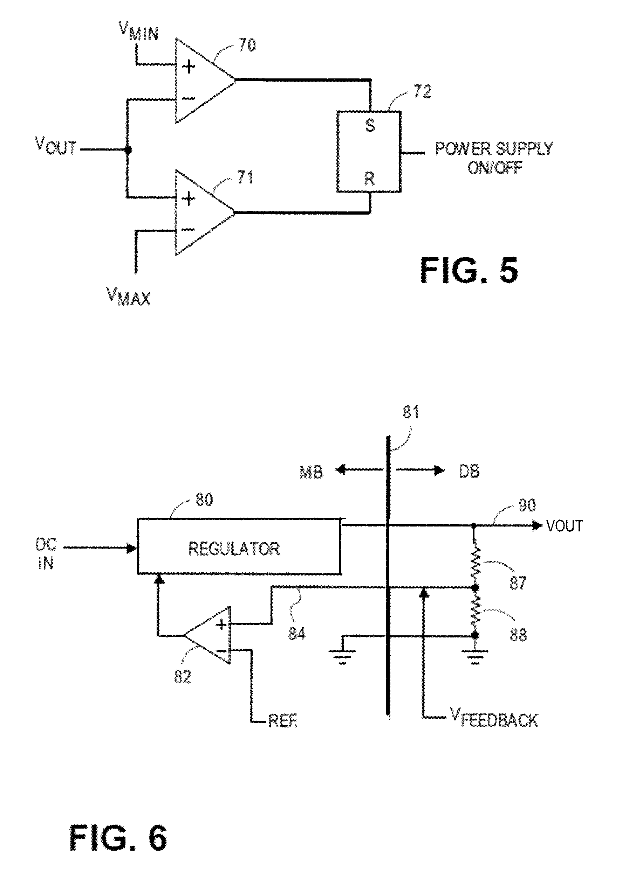

In a typical application the cycling of the on and off states of the power supply, as shown in Figure 4A, occurs at a rate of, for instance 10 Hz. A capacitor such as the capacitor 100 shown at the output of the regulator 80 of Figure 6 is selected to control the on/ off rate of the power supply so that the rate, such as shown in Figure 4A, is relatively low. The power supply may be turned on and off, for the power supply of Figure 3, simply by having switch 33 remain open. Note that in typical operation the "chopping" of the DC power which is in effect what switch 33 does, occurs at a much higher frequency than the on/off cycling shown in Figure 4A.

A circuit for providing the on/off operation is shown in Figure 5. Two operational amplifiers (OPs) 70 and 71 are used. OP 70 has its positive terminal connected to a reference potential equal to Vmin, whereas the OP 71 has its negative terminal connected to a reference potential equal to Vmax. The output of the power supply Vout is connected to the positive input of the OP 71 and the negative input of the OP 70. The output of the OP 70 is connected to the s (set) terminal of a bistable (flip-flop) circuit 72. The output of the OP 71 is connected to the r (reset) terminal of the flip-flop. The Q output from the flip-flop 72 provides the on/off signal, which as mentioned above can disable the switch 33 of Figure 3 in its open position.

As mentioned earlier, the MB of Figure 1 receives different DBs 13, each of which requires a different power supply potential for operation. This potential is developed on the MB. The circuit of Figure 6 informs the MB of what the proper potential is for that particular DB.

In Figure 6 the line 81 illustrates the interface (connector) between the MB and DB. A regulator 80 (which may be the regulator 42 of Figure 3) receives a DC input and provides an output power supply potential on line 90 of the DB. The regulator 80 provides a potential proportional to or equal to the potential on line 90 to the series coupled resistors 87 and 88 located on the DB. Feedback is provided back to the MB on line 84 through the interface 81. This feedback is obtained at the junction between the resistors 87 and 88. The feedback on line 84 is coupled to the positive terminal of an operational amplifier 82, the negative terminal of which receives a reference potential.

The feedback on line 84 is determined by the ratio of the resistances of resistors 87 and 88. These values are selected as a function of the power supply potential needed by a DB. When the feedback on line 84 matches the reference potential coupled to the operational amplifier 82, the regulator receives a zero signal to indicate that the proper DB supply potential has been reached. When this occurs, the regulator 80 can continue to provide that potential without increasing the potential.

In operation, once the MB determines that a DB has been plugged in, the regulator 80 begins to provide a potential which starts, for example, at zero volts and increases until the feedback on line 84 indicates that the proper potential has been reached. When this occurs the regulator 80 then maintains that potential on line 90, this being the proper potential for the DB.

Thus, power supply circuitry has been described which enables efficient supply of power from an MB to a DB even where different potentials are required by different DBs.

Claims

1. A switched mode power supply comprising:

a primary side circuit having a first switch and a primary winding of a transformer;
a secondary side circuit having the secondary winding of the transformer;
a capacitor;
at least one diode coupling the primary winding of the transformer to the capacitor such that when the first switch opens, the capacitor receives the back electromotive force (emf) from the primary winding to the extent that the back emf exceeds the potential on the capacitor and a drop across the diode;
a second switch that turns on and off pumping of the capacitor with the back emf;
a third switch coupling the capacitor and the primary side circuit; and
a detector that detects the loss of power to the primary side circuit and closes the third switch when such loss of power occurs.

2. The power supply of claim 1, wherein the capacitor stores charge at a potential greater than the voltage applied to the primary winding.

3. A method for providing stored alternate power in a switched power supply when the primary power to the power supply is removed comprising the steps of:

charging a storage capacitor from a primary winding when the switched power supply opens the primary winding such that the back electromotive force (emf) of the primary winding charges the storage capacitor; and
closing a switch such that the storage capacitor is coupled to a primary winding when the primary power is removed from the switched power supply.

4. A method for operating a power supply comprising:

providing a power supply having an output which has its peak efficiency at approximately its peak output;
determining a maximum and minimum potential to be supplied by the power supply;
switching the power supply from full OFF to full ON at the minimum potential and switching the power supply from full ON to full OFF at the maximum potential.

5. The method of claim 4 wherein the switching step comprises applying the output to first terminals of a first and a second operational amplifier.

6. The method of claim 5 including applying a potential representing the minimum potential to the other terminal of the first operational amplifier and applying a potential representing the maximum potential to the other terminal of the second operational amplifier.

FIG. 1

DAUGHTER BOARD

SEE DETAIL
FIG. 2

BACKPLANE
(MOTHERBOARD)

10

13

14

12

DAUGHTER
BOARD
CONNECTOR

13

16

15

BACKPLANE
CONNECTOR

14

10

**FIG. 2**

FIG. 3A

STORAGE C

50

47  46  49  55

38  37  35  36  39

40

REGULATOR 42

+ VOUT  -  45  DC OUT

53  33  31  32  30  AC

AC POWER OUT DETECTOR 52

54  TO DB (LAST GASP XMIT)

FIG. 3B

EP 2 779 360 A2

FIG. 4A

FIG. 4B

V_MIN

70

+
−

V_OUT

71

+
−

V_MAX

72

S

R

POWER SUPPLY
ON/OFF

# FIG. 5

81

MB ←→ DB

80

DC
IN

REGULATOR

90

VOUT

87

82

+
−

84

REF.

V_FEEDBACK

88

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7904740 B

- US 8041963 B